# EUROPEAN PATENT SPECIFICATION

(11) **EP 3 620 974 B1**
(45) Date of publication and mention of the grant of the patent: **06.03.2024**
(21) Application number: 19178795.1
(22) Date of filing: 30.01.2013
(51) Int. Cl.: G06V 10/46, G06V 10/54, G06V 10/141, G06Q 20/18, G06Q 20/32, G07F 7/06

(54) **METHOD FOR RECYCLING ELECTRONIC DEVICES**
VERFAHREN ZUR WIEDERVERWERTUNG ELEKTRONISCHER VORRICHTUNGEN
PROCÉDÉ DE RECYCLAGE DE DISPOSITIFS ÉLECTRONIQUES

(30) Priority: 01.02.2012 US 201261593358 P; 06.03.2012 US 201261607548 P; 06.03.2012 US 201261607572 P
(43) Date of publication of application: 11.03.2020
(62) Divisional of application: 13744249.7
(73) Proprietor: ecoATM, LLC, San Diego, CA 92121 (US)
(72) Inventor: BOWLES, Mark, San Diego, CA California 92121 (US); PLOETNER, Jeff, San Diego, CA California 92121 (US); BEANE, John, Andrew, San Diego, CA California 92121 (US)
(74) Representative: Grünecker Patent- und Rechtsanwälte PartG mbB

(56) References cited:
- WO-A1-2012/138679
- US-A1- 2010 169 231
- J.D.J. SHOTTON ET AL: "Efficiently Combining Contour and Texture Cues for Object Recognition", PROCEDINGS OF THE BRITISH MACHINE VISION CONFERENCE 2008, 1 September 2008 (2008-09-01), pages 7.1-7.10, XP055663737, DOI: 10.5244/C.22.7 ISBN: 978-1-901725-36-0

## Description

### Technical Field

The present invention generally relates to recycling of electronic devices. More specifically, the present invention relates to a kiosk for visually analyzing electronic devices and providing remuneration to an owner for recycling of the electronic device.

### Background Art

There has been a large increase in the number of electronic devices used by the typical consumer. These devices include cell phones, PDA's, mp3 players, GPS devices, cameras, beepers, remote controls, cordless phones, calculators, etc. The rapid pace at which new technology and models of electronic devices are introduced creates a situation where many consumers upgrade or replace one or more recyclable device on a frequent basis. Often, the consumer does not dispose of the prior electronic device, but rather just stops using it and begins using the new device. This may happen over several generations of such devices.

In addition to the electronic devices mentioned above, there are many other types of devices that have relatively high frequency replacement rates, including portable mobile electronic devices, such as cell phones, MP3 players, etc, and non-portable electronic devices, such as computers, printers, and the like. In addition to electronic devices, there are content based digital media such as games on CD, DVD, or cartridge, or entertainment mass storage items such as CDs, DVDs, BluRay, etc. There is a need for handling of such items in an ecologically friendly manner, both via recycling or by proper disposal procedures. It has not been convenient for owners of electronic devices to either recycle such devices or to properly dispose of such devices. There is currently little incentive for a device owner to "do the right thing" with a used device. When the owner just stops using a device and simply puts it in storage: the opportunity for recycling or re-use by another party is lost. If the owner just throws the device away in normal trash containers, the proper recycling or safe disposing of the device is thwarted.

One particular problem associated with this phenomenon can be illustrated by an example of mobile phones. There are more than 3.6 billion mobile phone users in the world with an annual growth of 10% per annum. The replacement rate of mobile handsets is roughly every 18 months as new models have more features and new standards evolve. Wireless carriers also offer new phones below cost, or free, as incentives to get customers to sign lucrative two-year service contracts ensuring a constant build-up of old mobile phones. Old mobile phones and other mobile devices (pagers, PDAs) present a growing threat to the environment. As of 2007, there are more than 750 million mobile phones waiting to be recycled in the US, either in drawers or already in the waste stream. Another 150+ million or so are added every year. Once in the waste stream, these devices may leak Lead, Mercury, Cadmium, Arsenic and other toxic substances into the water supply. Municipalities often incinerate their waste, instantly putting these toxic elements into the air, and they return to earth in rain water. A problem that needs to be solved is to make it easy and accessible for the public to recycle or resell their mobile phones and other recyclable devices. Two reasons why mobile phones are not being recycled or resold are difficult access to recycling or reselling facilities, and secondly security concerns about the information stored on the mobile phone. In addition to mobile phones, the same problems apply to many other electronic devices.

The document US 2010/169231 A1 discloses a kiosk for analysis of a mobile phone and financial remuneration to a user for submission of the mobile phone. The kiosk includes a housing, a user interface, at least one camera and a processor. The housing has an inspection area for placement of a mobile phone therein. The at least one camera is capable of acquiring an image of a portion of a mobile phone placed within the inspection area including at least an image of a display screen of the mobile phone. The processor is configured to identify the brand and model number of the mobile phone based on at least one of the information from the user and the images from the at least one camera. The processor is configured to determine a financial remuneration value for the mobile phone.

### Summary of the Invention

The present invention enables one to securely recycle, donate, trade-in, and/or sell mobile phones in a publicly accessible location. In an embodiment where mobile phones are recycled, the invention is used by a mobile phone owner to submit his/her mobile phone for recycling via a recycling kiosk and receive compensation in some manner. The compensation might be dispersed via cash, voucher, credit or debit card, or other magnetic or electronic transaction methods.

A method according to the invention is defined in claim 1. Preferred embodiments are defined in the dependent claims.

### Brief Description of the Drawings

FIG. 1 is a perspective view of a recycling kiosk.
FIG. 1A is a front view of the recycling kiosk of FIG. 1.
FIG. 1B is an isolated view of a front of the recycling kiosk of FIG. 1.
FIG. 1C is an isolated view of a front of the recycling kiosk of FIG. 1.
FIG. 2 is an isolated view of an electrical connector wheel.
FIG. 3 is a perspective view of internal components of a kiosk.
FIG. 3A is a perspective view of internal components of a kiosk.
FIG. 3B is a perspective view of internal components of a kiosk.
FIG. 3C is a perspective view of internal components of a kiosk.
FIG. 4 is an isolated view of a phone an inspection plate of a kiosk.
FIG. 4A is an isolated view of a phone being transferred in the kiosk.
FIG. 4B is an isolated view of a phone being transferred in the kiosk.
FIG. 4C is an isolated view of a phone being binned in the kiosk.
FIG. 5 is a block diagram of components of a recycling kiosk.
FIG. 6 is a block diagram of components of a recycling kiosk.
FIG. 7 is an isolated view of an inspection area of a kiosk.
FIG. 8 is an isolated view of a camera in a dome of a kiosk.
FIG. 9 is an isolated view of a phone in an inspection area of a kiosk.
FIG. 10 is an image of a lit mobile phone (with the lights on).
FIG. 11 is an image of a non-lit mobile phone.
FIG. 12 is an image of a subtraction result of the lit phone and the non-lit mobile phone.
FIG. 13 is an image of a trained image of a mobile phone with the screen not on.
FIG. 14 is a graph of an intensity profile from the top down demonstrating a match (the spiking line at 211 is the text area, which is not in the trained image).
FIG. 15 is an image of a lit unauthenticated mobile phone (with the lights of the inspection area on) displaying a picture printed on cardboard and placed underneath the display screen glass in place of the LCD.
FIG. 16 is an image of a non-lit unauthenticated mobile phone (with the lights of the inspection area off) displaying nothing.
FIG. 17 is an image of an authenticated mobile phone having cracks in the display screen.
FIG. 18 is a flow chart for a method of recycling an electronic device.
FIG. 19 is a flow chart for a method of recycling an electronic device.
FIG. 20 is a flow chart for a method of recycling an electronic device.

### Best Mode(s) For Carrying Out The Invention

The invention allows for automatic analysis of an electronic device to determine if the device damaged in order to ascertain a value for recycling the electronic device. The automatic analysis is performed utilizing a kiosk. The kiosk has an inspection area with an upper chamber and a lower chamber. Preferably each chamber has a camera. The kiosk also has a transparent plate between the inspection area to allow for viewing the bottom of an electronic device placed on the transparent plate. Each chamber preferably has multiple mirrors to provide multiple views of an electronic device within the inspection area. The mirrors allow for obtaining a multi-dimensional view of an electronic device placed on the transparent plate. Preferably, the mirrors allow for obtaining a 360 degree view of an electronic device placed on a rotatable transparent plate. Preferably, the mirrors allow for determining a height, width and/or length of an electronic device.

Mobile phones are preferably partitioned into three basic shapes: 1) a flip phone or clam shell type such as the MOTOROLA RAZR; 2) a slider phone which exposes a keyboard or screen such as the MOTORLA DROID; and 3) a bar shape phone such as the Apple iPHONE or the Research in Motion BLACKBERRY. The invention is also utilized with a network of kiosks in public spaces that perform a combination of recycling processing steps that receive, identify, visually inspect, electrically test, electrically erase, grade quality, containerize (bag), label, and inventory recyclable electronic devices. Each kiosk determines some form of compensation to an owner of the device. This compensation is preferably in the form of a direct payment, a credit on an account, a donation to a charity, a discount coupon for future purchases, or some similar form of compensation. The device owner has the choice to accept the offered compensation or reverse the transaction and retrieve the device.

In the following description, an example is given with respect to mobile phones. However, those skilled in the pertinent art will recognize that the system can be implemented with any number of other devices that have a LCD screen.

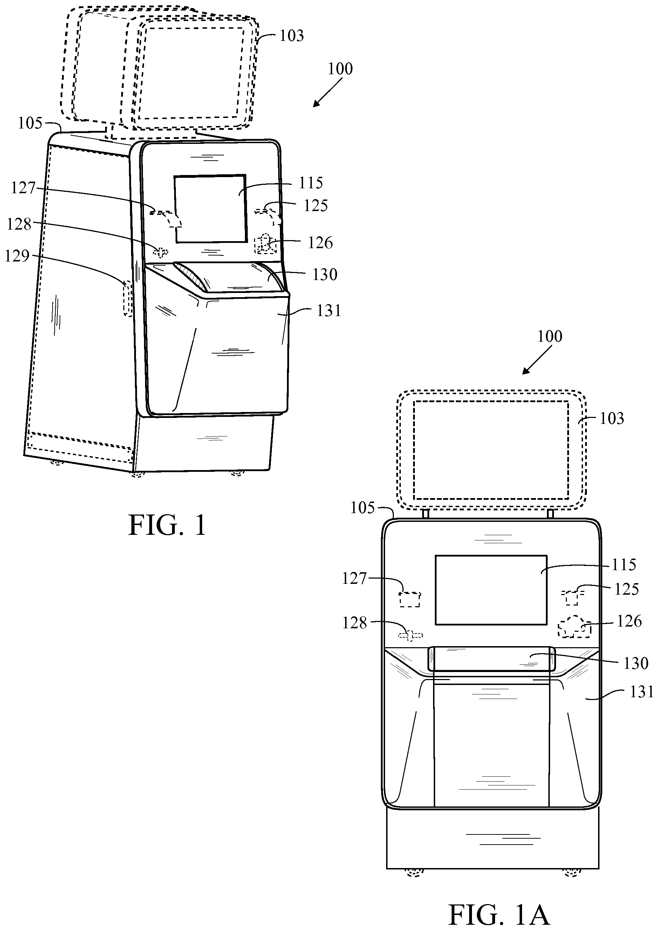

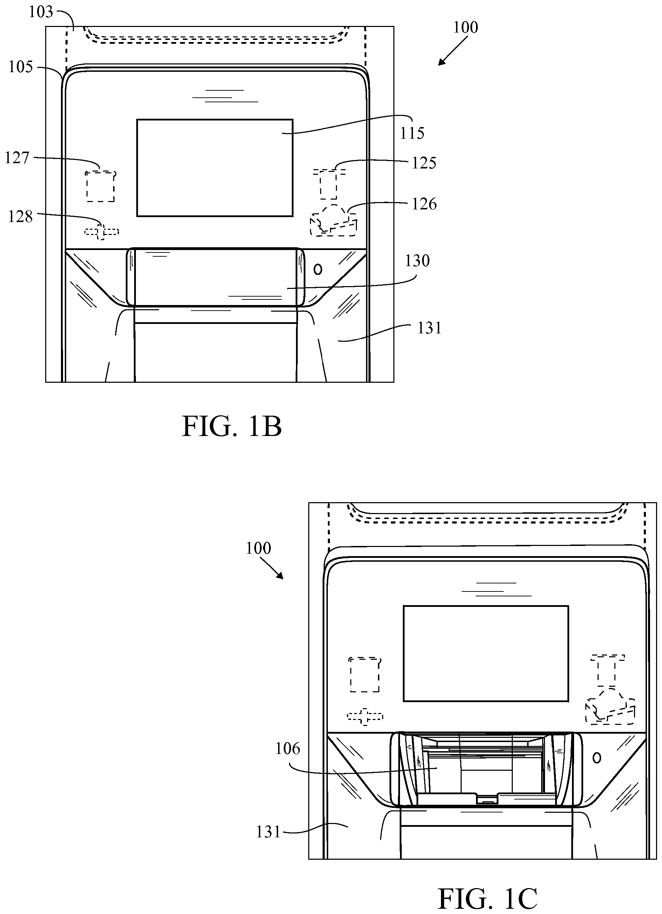

As shown in FIGS. 1, 1A, 1B and 1C, a kiosk for recycling electronic devices and providing financial remuneration is generally designated 100. The electronic device may be a Smart Phone, mobile phone, tablet computer, IPOD^{®} device, MP3 Player, GPS device, e-reader, etc. The kiosk 100 has a housing 105 in a pseudo-rectangular cube shape. The kiosk 100 is preferably of a typical size and shape of a vending machine, such as a soda machine, coin changing machine, can recycling machine, or other vending machines A header 103 allows for marketing and videos. An access door 130 in a front body area 131 provides access to an inspection area 106 for electronic devices. The front of the housing 105 has a display screen 115 for providing information to a user, and acts as a user interface in a touch screen embodiment. The exterior of the housing 105 also preferably has a label printer 125, a voucher dispenser 126, a receipt printer 127, and a cash or card dispenser 128. The exterior housing may also have a thumbprint reader.

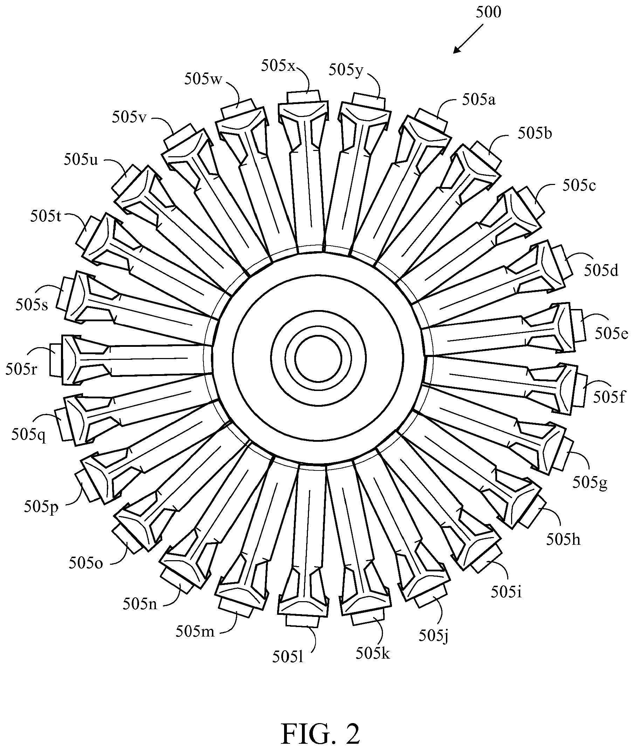

The kiosk 100 allows for automatic visual analysis of an electronic device to identify the electronic device and to determine electronic device is damaged in order to ascertain a value for recycling the electronic device. Further, the kiosk 100 also allows for electrical analysis of the electronic device. As shown in FIG. 2, the kiosk 100 comprises a carousel 500 containing a plurality of electrical connectors 505a-505y. Each of the electrical connectors 505 has a unique connection plug for removable connection to an electronic device. Each of the electrical connectors 505a-505y has a cartridge removeably secured in the carousel 500. Thus, new electrical connectors 505 can be substituted for older electrical connectors 505. Further, the kiosk 100 is designed to allow for automatic removal of the electrical connector 505 using detachment mechanism 511.

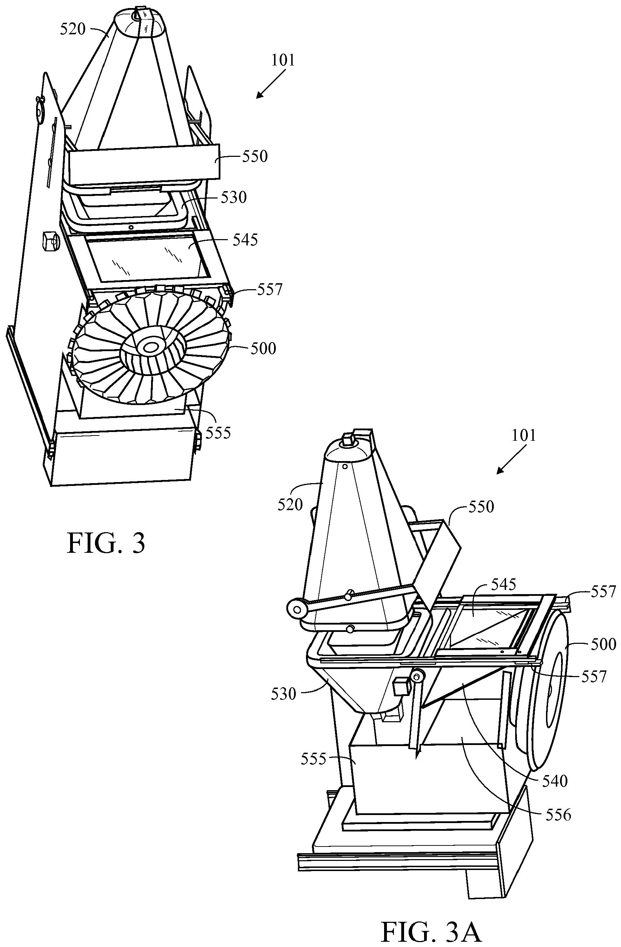

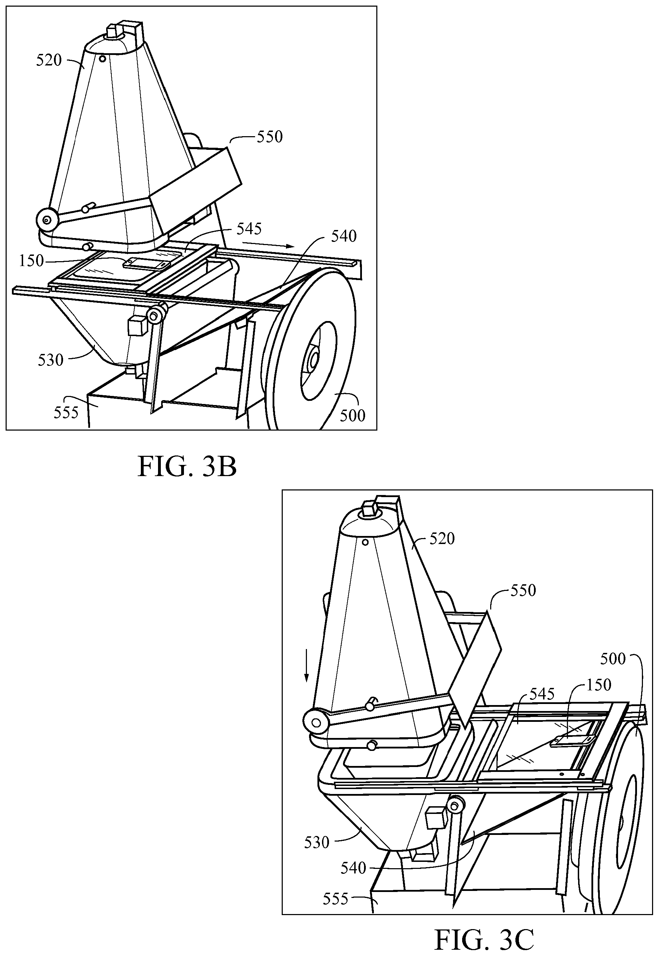

As shown in FIGS. 3, 3A, 3B and 3C, the internal mechanism 101 of the kiosk 100 includes an upper chamber 520, a lower chamber 530, a binning plate 540, a transparent plate 545, a door 550, a bin 555 and the carousel 500. Preferably, the carousel 500 is able to hold approximately 25 electrical connectors 505, wherein the electrical connectors 505 are interchangeable to easily adapt to the variations in USB and other like connections. As shown in FIG. 3B, a mobile phone 150 is placed on the transparent plate 545 and transferred to an inspection area 106 within upper chamber 520 and lower chamber 530. Both the upper chamber and the lower chamber preferably have a bell-like shape. As shown in FIG. 3C, the mobile phone is moved between the upper chamber 520 and the lower chamber 530 for visual analysis. The transparent plate, preferably composed of glass of a transparent plastic material, allows for imaging components within the upper chamber 520 and lower chamber 530 to obtain multiple view images of the mobile phone 150. Preferably, a 3-D profile of the mobile phone is generated in order to provide visual analysis for identification and condition of the mobile phone. Once the visual analysis is complete, the transparent plate 545 moves out from between the upper chamber 520 and lower chamber 530.

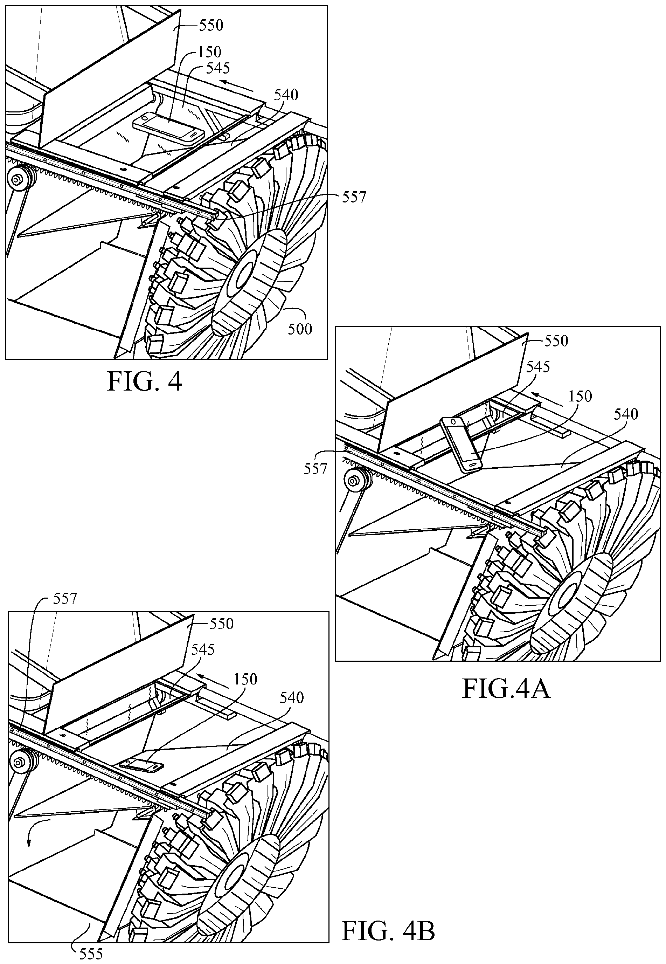

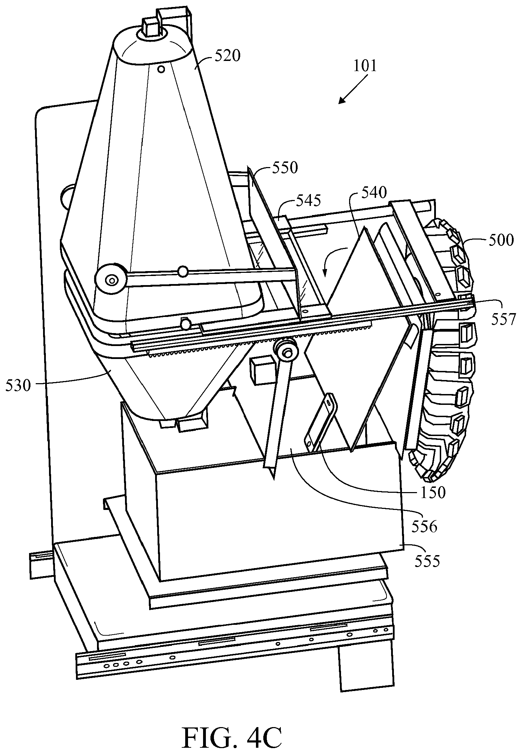

FIGS. 4, 4A, 4B, and 4C, show the automatic transport and binning of an electronic device 150 within the internal mechanism 101 of the kiosk 100. As shown in FIG. 4, the door 550 is lowered to reside above the transparent plate 545, which is then moved inward with the mobile phone 150 thereon. As shown in FIG. 4A, as the transparent plate 545 is moved inward, the mobile phone is blocked by the door 550 and engages binning plate 540 as the mobile phone begins to fall into an opening created by the inward movement of the transparent plate 545. As shown in FIG. 4B, once the mobile phone is on the binning plate 540, the binning plate 540 is slowly lowered on one side to open into the bin 555. As shown in FIG. 4C, the mobile phone 150 slowly falls through an opening 556 into the bin 555 to secure the mobile phone 150 and for collection at a later time. The entire process performed at a rate of speed to prevent damage to the electronic device being recycled.

The kiosk 100 is of a typical size and shape of a vending machine, such as a soda machine, coin changing machine, can recycling machine, or other vending machines. The housing 105 of the kiosk 100 protects the internal mechanism 101 and secures electronic devices submitted for recycling. The housing 105 is preferably constructed of a metal material, such as steel or aluminum, to prevent authorized access to the kiosk 100.

The inspection area 106 is preferably designed to permit a detailed visual inspection of an electronic device such as a mobile phone, tablet computer, e-reader, MP3 players, PDA. The size of the inspection area 106 is preferably 30 centimeters ("cm") in length, by 30cm in width and 20cm in height. The walls of the inspection area are preferably white and/or mirrored to provide imaging of the electronic device.

The couplings from the kiosk 100 and to a remote computer are preferably a single coupling to a communications network such as the internet via wired LAN, wireless LAN, cellular or any other proprietary communications system. The Kiosk 100 preferably includes a processor 160 for processing the information obtained from the mobile phone and for controlling the components of the kiosk 100. Preferably, the processor 160 is a standard personal computer ("PC") or other type of embedded computer running any operating system such as Linux or MAC OS. The processor 160 is most preferably a small form factor PC with integrated hard disk drive ("HDD"), central processing unit ("CPU") and universal serial bus ("USB") ports to communicate with the other components of the kiosk 100. One most preferred CPU is a DELL PC OPTIPLEX 780. Alternatively, the processing means is a microprocessor with a standalone motherboard which interfaces to a discrete HDD, power supply and the other components of the kiosk 100. The kiosk 100 preferably includes a memory 161 or other storage device, such as a disk drive, that stores the executable applications, test software, databases and other software required to operate the recycling kiosk 100.

The external communication component for the kiosk 100 preferably includes a wired Ethernet to provide connection to the internet, or alternatively the external communication component includes a wireless modem such as GSM, CDMA, 3G and 4G technologies for data communications.

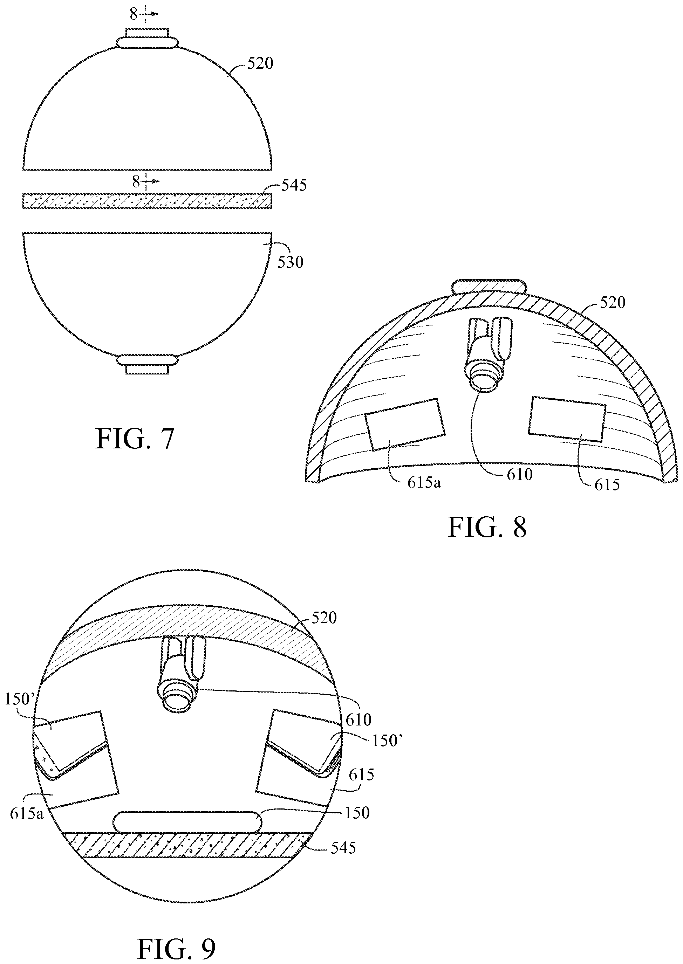

As shown in FIGS. 7-9, the visual inspection of an electronic device such as a mobile phone 150 in the inspection area 106 is preferably performed by at least one camera 610 within the upper chamber 520. The lower chamber 530 also preferably has at least one camera or other imaging component such as a scanner. Alternatively, the visual inspection is performed by multiple cameras. A preferred camera 610 is a 1 megapixel machine vision camera. If a single camera 610 is utilized in the inspection area 106, the camera 610 preferably is movable to increase a field of view of the inspection area 106 to inspect the electronic device 150 such as a mobile phone placed on the transparent plate 545. The camera 161 is preferably movable. Preferably the camera 610 is positioned to image a LCD screen 153 of the electronic device 150 to determine if the LCD screen 153 is damaged. The interior surfaces of the upper chamber 520 and lower chamber 530 preferably include mirrors 615 in order to optimize viewing of an electronic device positioned within the inspection area 106. As shown in FIG. 9, a reflection 150' of a mobile phone 150 is illustrated. The camera 610 is also preferably movable to image a data port of the electronic device to determine the type of electrical connector 505 for the electronic device in order to perform an electrical analysis of the electronic device. Alternatively, the entire interior surfaces of the upper chamber 520 and the lower chamber 530 are mirrored for optimization of imaging of the electronic device. The camera(s) alternatively are CCD or CMOSS.

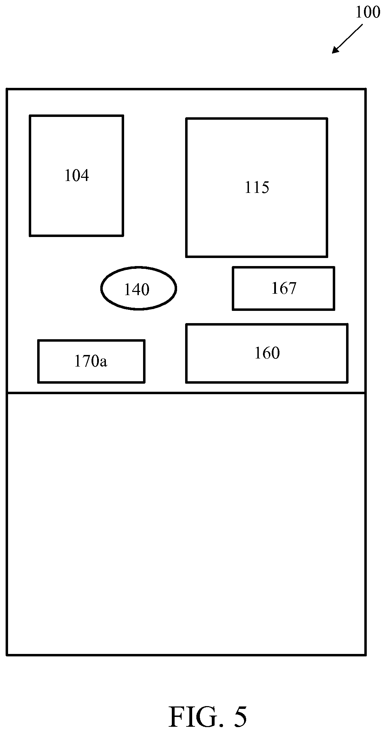

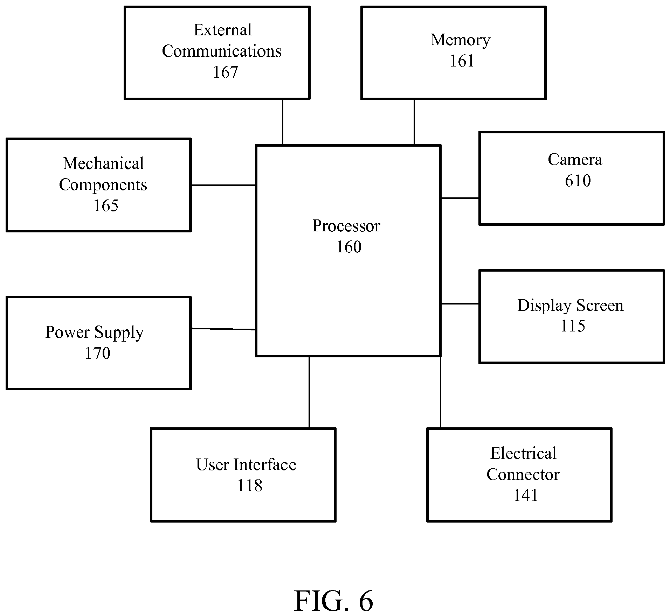

FIG. 6 is a block diagram of the main components of the kiosk 100. A processor 160 is preferably in communication with the other components of the kiosk 100. The memory 161 preferably contains a database of information on multiple mobile phones including images, physical characteristics, prices and other similar information. The external communications 167 preferably communicates through a wireless connection or Ethernet with a network to receive and transmit information to a remote site. The power supply 170 is preferably received through a plug-in connection to a wall outlet. The mechanical components 165 include the electrical connector carousel 500, the transparent plate 545, the binning plate 540, the door 550, and other similar components. The camera 610 or cameras, electrical connectors, and a user interface interact with the processor 160 as discussed above. FIG. 5 illustrates an internal back of a recycling kiosk 100. As shown a processor 160 is preferably a personal computer having a battery backup 170a, a wireless connection 167 for external communications, an electrical connection 140, a receipt dispenser 104 and a display screen 115.

The processor 160 identifies the electronic device 150 submitted for recycling using information from the visual inspection and user interface. The processor 160 also determines the proper electrical connector 505 for connection to the data port of the electronic device 150 using information obtained during the visual inspection or from the user interface. The processor 160 also directs and receives information from the electrical analysis of the electronic device 150 performed using the electrical connector 505 connected to the data port of the electronic device 150. The processor also preferably determines a financial remuneration for the submitted electronic device 150 based on the visual inspection, optionally the electrical analysis and data stored in the memory 161 of the kiosk or information provided externally through the external communication component 167.

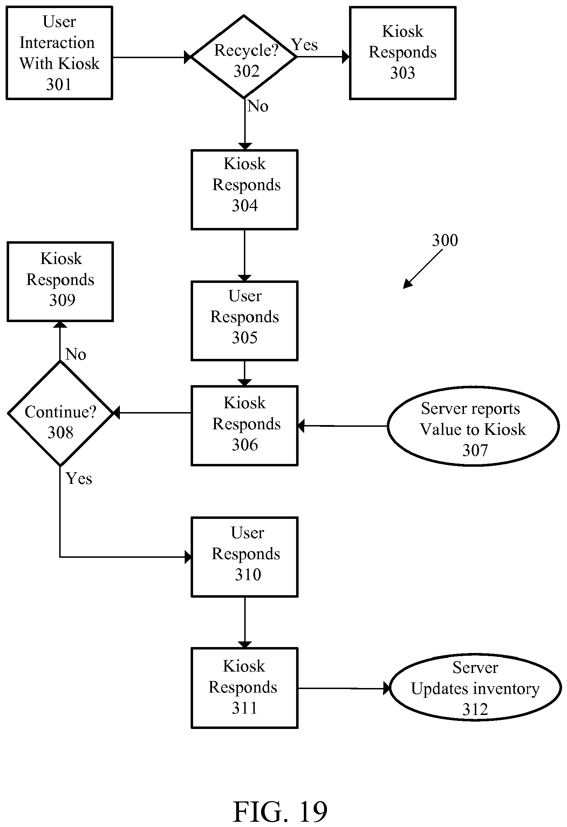

A flow chart for a preferred recycling method is shown in FIG. 19. At step 301 a customer elects to sell or recycle an electronic device. The customer checks to see if the electronic device is supported for sale/refurbishing from a list on the screen of the kiosk. The customer activates the on-screen menu system and either enters the phone model directly or goes through a series of menus to determine if the electronic device is eligible for sale or only for recycling. At decision block 302 it is determined if the electronic device is only available for recycling. If yes, (i.e. it is not on the list of electronic device available for reselling) the customer can insert the electronic device into receptacle at step 303 and the electronic device falls into bin 112 for recycling.

If the electronic device is supported for refurbishment/resale the customer is then encouraged to engage the testing/rating operation of the system. At step 304, the system has determined the correct connector to couple to the electronic device. Connectivity options and are not limited to cable, standard or proprietary connectors, hard docks, reading removable or external physical memory or other wireless methods like WiFi, Bluetooth, RFID, NFC, and the like. At step 305 the electronic device is connected and inserted into inspection area 106. If this has been done correctly, the customer is given some indication (e.g. a green light) and the system proceeds to step 306. At step 306 the electronic device is tested for operation using diagnostics and operating via, for example, the OMSI interface. The diagnostics preferably includes electrical and physical testing including testing the electronic device's battery, screen, memory, button functionality and structural integrity.

Preferably, the electronic device is imaged and analysis software is used to identify scratches, cracks, wear patterns, dents, broken or missing pieces, inclusion of features such as lenses, buttons, connectors, badges, labeling and/or branding. Identification may be done by image comparison or other similar methods where the image taken of the electronic device is normalized and compared to a reference image. Other inspection methods may be used in conjunction with visual and/or electrical testing including weighing to determine specific weight and use that data to further refine verification of manufacturer and verification of exact device model. In another embodiment, the photographic image is used to identify the correct manufacturer and model number/product number. Visual identification could include any combination of the following: calculations based upon measurement, physical (e.g., mm, inches), pixel count or other. Identification based upon electronic device dimensions, location/size of buttons, LCD and other physical characteristics. One camera or multiple cameras may be used to determine height, width, depth as needed. Identification based on OCR (Optical Character Recognition) of identifiers such as Carrier (for phone and tablet computers), brand, model, serial number, other identifiers. Identification based upon barcodes. Consumer may be asked to orient CE on its front, back, side and then asked to change orientation as needed. Consumer may even be asked to remove CE cover(s), batteries and the like in order to gain access to identifiable items, such alphanumeric or barcode data. The kiosk 100 provides a way to use visual inspection with electrical inspection to identify a device, determine its value, and reduce possible fraud.

In one embodiment, the kiosk 100 communicates with the carrier associated with a mobile phone to collect any information that could be germane to the device, including, for example, validation or authentication, registered ownership, account status, time in service, and the like. In some cases, when the customer's identification information does not match the registered owner information, the kiosk 100 automatically contacts the assumed owner in some manner (automated telephone call, email, text message, etc.) to alert the owner of the phone of the possible transaction.

Another feature of an embodiment of the kiosk 100 is to determine if there is personal information on the electronic device. This is determined by the presence of data in particular storage registers in the memory (e.g., quick-key stored numbers) or by looking at file types (jpegs, mp3's, etc.,), or just assuming all non-default storage locations must contain personal data. The customer is offered the chance to erase the data from the phone. One option allows the customer to request that the data be first downloaded and then sent to a location designated by the customer (e.g., email address, website, etc.). In another embodiment, there is a slot for the customer to enter a memory card (e.g. USB drive, memory stick, etc.) whereupon the kiosk 100 uploads the data to the memory device. In still another embodiment, the kiosk 100 offers a web location from which the user retrieves the data at some later time if desired. In another embodiment, the user elects to have the data placed in another electronic device purchased by the customer at the kiosk 100 or in the location of the kiosk 100 or some other store. The customer preferably selects a user name and password to access the system provided storage location.

Once the value is determined, the value is provided at step 307 to the kiosk. The kiosk 100 then offers the customer a price or other remuneration for the phone that is typically less than the resale value. At step 311, the kiosk 100 completes any additional testing and diagnostics of the electronic device, disconnects the cable from the electronic device, and prints a receipt for the customer. Transfer of funds may be authorized via the kiosk 100 by crediting a customer credit card or account by dispensing cash, or by dispensing a voucher or coupon. At step 312 the kiosk 100 updates its inventory database and transmits the update via a communications network to a kiosk server.

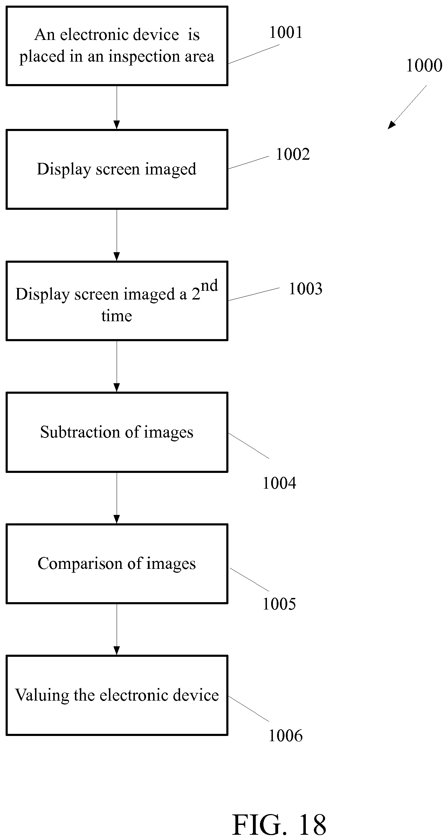

One preferred method of the present invention is illustrated in the flow chart of FIG. 18. The method 1000 begins at block 1001 with a mobile phone 150 positioned within an inspection area, 106 of a kiosk 100 wherein the inspection area has a light. The electronic device is imaged in a deactivated mode. At block 1002, the display screen of the electronic device is imaged, wherein the electronic device is in the active mode and the light in the inspection area 106 is turned off, resulting in an analysis image of the electronic device. At block 1003, the display screen of the electronic device 150 is imaged a second time, however the light in the inspection area 106 is turned on, resulting in a first image of the electronic device. The mobile phone 150 must have a camera function to be placed within a camera mode. At block 1004, the first image of the electronic device is subtracted from the analysis image, generating a subtraction image of the electronic device. At block 1005, the subtraction image is compared to image of the electronic device in a deactivated mode to determine if the display screen of the electronic device has any defects and to define an analyzed electronic device. At block 1006, the value of the mobile phone is determined as discussed in more detail below.

Preferably, the kiosk 100 of the method comprises a housing 105, the housing 105 comprising a user interface on an exterior surface of the housing for the user to input information, an upper dome and a lower dome, wherein the upper dome and the lower dome comprise a plurality of mirrors. The kiosk 100 further comprises an upper chamber camera, a lower chamber camera and a transparent surface. The kiosk 100 further comprises a processor 160 within the housing and in communication with the at least one camera, the processor 160 configured to identify the brand and model number of the electronic device based on at least one of the information from the user and the images from the at least one camera, the processor 160 configured to determine a financial remuneration value for the electronic device.

The upper and lower domes preferably comprise walls composed of mirrors. The dome shaped apparatus further comprises a transparent surface and at least one camera, the camera capable of obtaining a multiple views of an electronic device placed within the dome shaped apparatus. The upper dome preferably comprises an upper chamber camera. The lower dome preferably comprises a lower chamber camera. Preferably, a combination of each of the upper dome and lower dome cameras and the plurality of mirrors allow for an image of the device placed on the transparent surface. Preferably, the combination of each of the upper dome and lower dome cameras and the plurality of mirrors allow for a 360 degree of the electronic device placed on the transparent surface. Preferably, each of the upper dome and lower dome cameras are moveable.

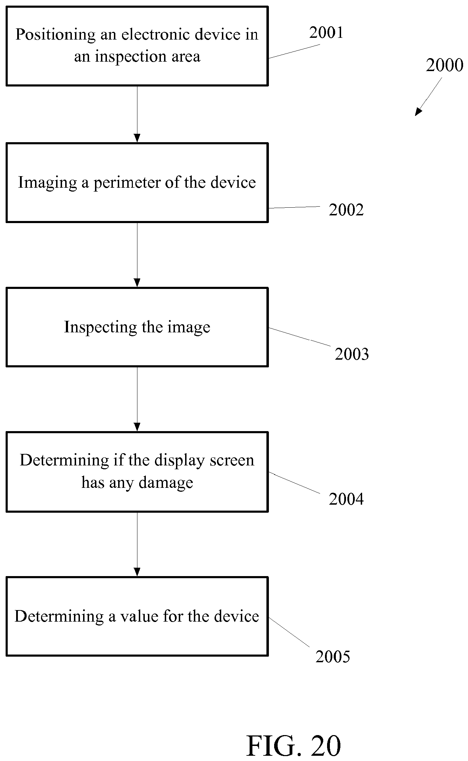

An alternative method of the present invention is illustrated in the flow chart of FIG. 20. The method 2000 begins at block 2001 wherein an electronic device is placed in an inspection area of a kiosk 100, the inspection area 106 having a camera. At block 2002, a portion of the electronic device is imaged, the portion comprising the perimeter of the electronic device, resulting in a perimeter image. At block 2003, the perimeter image of the electronic device obtained by at least one camera disposed in the inspection area is inspected. At block 2004, it is determined if a display screen of the electronic device has any defects and to define an analyzed electronic device. At block 2005 a value for the analyzed electronic device is determined.

The information from the perimeter image preferably includes a model name and location of a LED aperture. Additionally, the processor 160 is configured to automatically adjust the perimeter edge to a rectangular shape, to compensate for screen damages that result in distorted image due to blacking out of certain parts of the screen. The perimeter image comprises a 360 degree image. Information from the perimeter image comprises a location of a USB port, a location of the volume control buttons, a location of the camera button, and a location of the power on and off button. The information from the perimeter image also comprises a location of the camera lens and a logo of the electronic device.

Preferably, visual inspection and recognition software is utilized by the kiosk 100 to analyze a mobile phone 150. In one preferred method, a recognition algorithm is applied to a specific make and model of a mobile phone 150. The visual inspection and recognition software determines the borders of a mobile phone 150 under inspection to determine the external dimensions of the mobile phone 150. The external dimensions are utilized to determine a subset of possible mobile phones from a master database of mobile phones stored in the memory 161 of the kiosk 100 or available online to the kiosk 100 using external communications. The visual inspection and recognition software then preferably uses a set of secondary and tertiary features to further distinguish the mobile phone 150. These secondary and tertiary features can include placement and size of the display screen, placements and size of the keyboard, unique buttons, placement of ports, and other distinguishing features. Once an exact make and model of the mobile phone is determined, the visual inspection and recognition software subtracts an image of the mobile phone 150 from an image of a perfect mobile phone for the same make and model. The result of the subtraction is preferably a quantifiable number of pixels that are calibrated into categories of broken or missing parts, cracked screen, and low, medium or high wear.

Alternatively, the visual inspection is performed using neural network pattern recognition techniques to identify the mobile phone 150, then filter algorithms are utilized to determine defects such as cracked screens. Further, those skilled in the pertinent art will recognize that other visual inspection techniques may be employed.

Further, visual inspection optionally includes obtaining a heat signature for the mobile phone 150. One preferred method of obtaining a heat signature of a mobile phone 150 is to raster a laser across the mobile phone to characterize a heat decay profile of the submitted mobile phone 150. This heat decay profile is then compared to a heat decay profile for a perfect sample of the same mobile phone 150. The heat decay profile indicates the wear of the external surface of the mobile phone 150, which is used in calculating the financial remuneration for the mobile phone 150.

Yet another method of the present invention comprises positioning an electronic device in an inspection area of a recycling kiosk 100, powering up the electronic device and displaying a known image on a LCD screen of the electronic device. The known image on the LCD screen of the electronic device is compared with a stored duplicate of the known image stored on the recycling kiosk to determine any defects in the LCD screen of the electronic device and to define an analyzed electronic device. The method further comprises determining a value for the analyzed electronic device.

In one embodiment of this method, the known image is a start-up image for the carrier of the electronic device. In an alternative embodiment, the known image is an image of a national park. The method may further comprise performing an electrical analysis of the electronic device.

The method preferably images the electronic device in whatever state the electronic device is in when the electronic device is placed into the kiosk. Then the method compares the images to the training database of all the different types of electronic devices that have been trained in the past (and all the trained images are preferably with their screens off).

The method preferably images more than the display screen of the electronic device. The method preferably images everything (some keyboards light up, on Blackberries for instance) on the electronic device.

The method preferably subtracts the analysis image from the first image. The method also preferably multiples the analysis image by a multiplier factor, to account for changes in the brightness of the screen. For instance, if the brightness of the screen does not change at all between the two images, the multiplier factor is 1. If the brightness of the screen was ½ as bright during the analysis image as during the "first image", the analysis image is multiplied by 2 so that the brightness matches for better subtraction (basically there is a brightness compensation factor to account for screens that have auto-brightness that change when the dome light of the kiosk is on versus off). This image is the "synthesized" image, because the image is synthesized in part with the subtraction. The subtracted image is used synonymously with synthesized image.

The method preferably compares the subtracted image to all the different trained images of electronic devices, to first identify the electronic device, and then to analyze defects once the electronic device is identified. But the primary purpose of doing the subtraction is to generate an image of what the electronic device would look like if its screen was off, because it is preferred to compare that image to the trained images of electronic devices, which have their screens off, to identify the electronic device in the first place. Then, analyzing for defects comes after the electronic device is identified (or identified what it might be, which it might be a set of five or ten electronic devices that are similar).

Preferably, images are generated for the electronic device in the kiosk and compared to training data to identify the electronic device and determine the condition of all its features.

There are two steps to processing: 1) obtain the silhouette images to determine where the electronic device is in the kiosk and the size of the electronic device (including the side view, the size of the sides of the electronic device, etc); 2) obtain the fully lit images and "map the texture" of the electronic device across the silhouette images to determine what the electronic device actually looks like when the electronic device is surrounded by light, instead of just the silhouette.

In one embodiment, the mirrors are only a small section of the walls of the chamber. Most of the walls are preferably white plastic/paint, made to diffuse the light to create uniform lighting, and minimize specular reflections.

In a preferred kiosk, five of the six faces of the electronic device are seen. The top camera sees the front of the electronic device and three of its sides (left, top, right), and the bottom camera sees the back of the electronic device. The part of the electronic device at the bottom (on an IPHONE phone, where the cable connector is) isn't visible because there only have three mirrors, not four. So the combination of both cameras sees five of the six sides, and the top camera only sees four of the six sides. The location, size, shape and color of all the buttons, regardless of the function, are imaged. For example, the IPHONE 4S mobile phonet looks identical to the VERIZON IPHONE 4 mobile phone, except that it has a SIM card slot on the side. So the kiosk 100 uses the presence of that SIM card slot to determine that the electronic device is an IPHONE 4S mobile phone, and not an VERIZON IPHONE 4 mobile phone.

The present invention preferably extracts features from the training images and stores them in a database, along with other information such as the make and model of the electronic device, the area/location of the screen, and other data.

The "perimeter image" is preferably not used to detect defects in the screen. The present invention analyzes the silhouette (area) of the image to help identify the device, because this silhouette provides the dimensions of the phone, and helps narrow down the devices in the training database to compare to (no sense comparing a big phone to all the small ones.... just compare to other phones of a similar size).

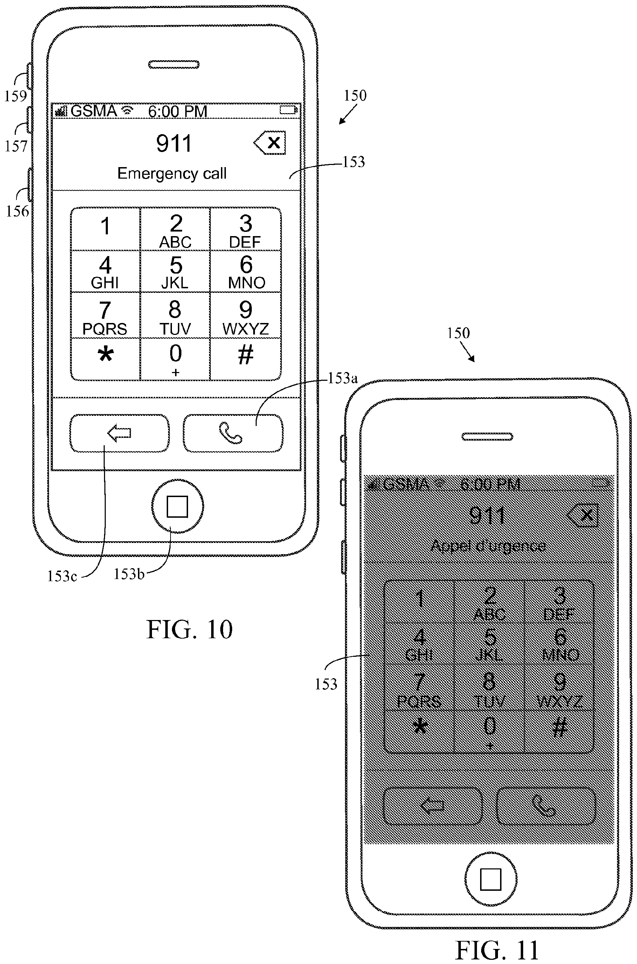

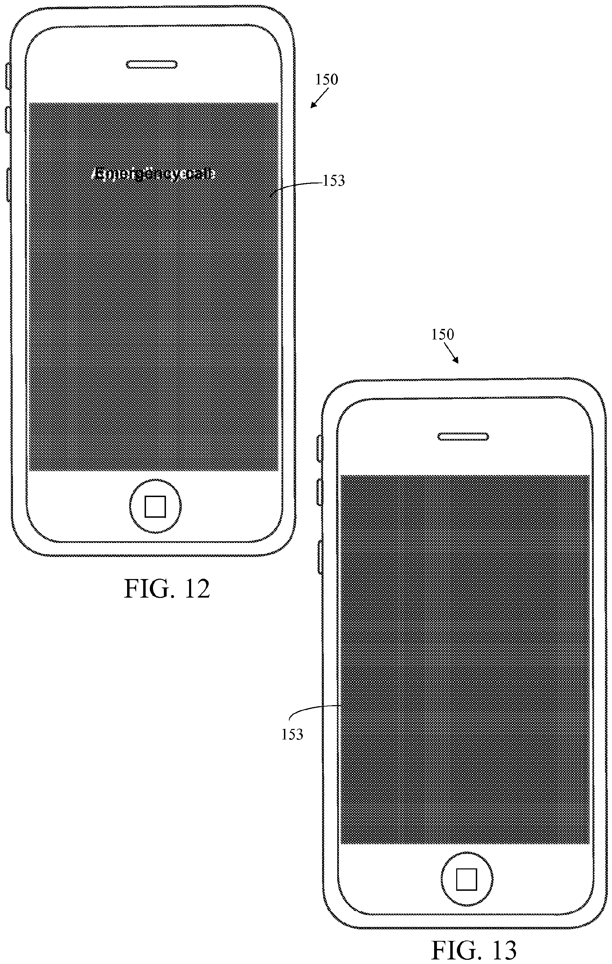

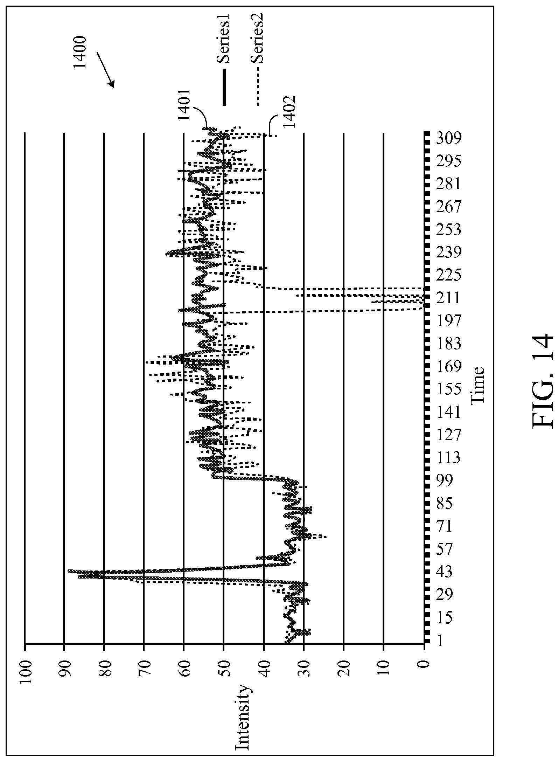

FIG. 10 is an image of a mobile phone 150 with the lights on. The display screen 153 of the mobile phone is illuminated. Touchscreen buttons 153a-153c are visible. On the perimeter of the phone 150 physical buttons 156, 157 and 159 are visible. FIG. 11 is an image of the phone of FIG. 10 with the lights off. The display screen 153 is barely visible. FIG. 12 is a subtraction result of the image of the phone 150 with the lights on subtracted from an image of the phone 150 with the lights off. FIG. 13 is an image of a phone with the display screen 153 off. FIG. 14 is a line intensity profile of the image of FIG. 13 (solid line 1401) versus the image of the phone 150 of FIG. 12 (dashed line 1402). The spike at time 211 represents the text area in FIG. 12.

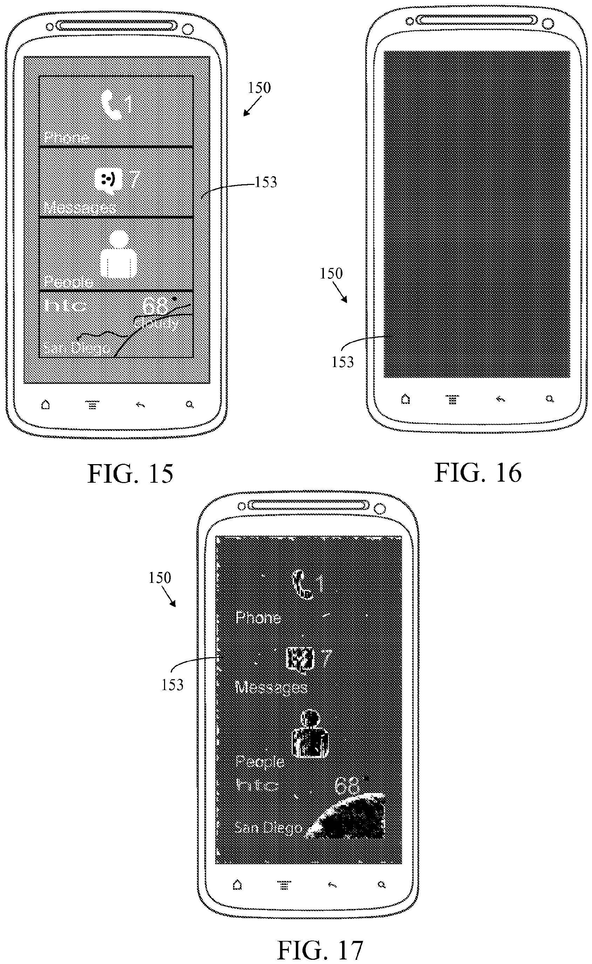

Another aspect of the present invention is detection of fake electronic devices. As shown in FIG. 15, an image of a lit unauthenticated mobile phone 150 (with the lights of the inspection area on) displays a picture printed on cardboard and placed underneath the display screen glass 153 in place of the LCD. The image has many colors and color variation on the screen area. However, the mobile phone is not emitting any light. When the lights of the inspection area are turned off, the display screen of the mobile phone 150 displays nothing as shown in FIG. 16. Thus, the kiosk 150 of the present invention can detect non-authenticated (counterfeit) electronic devices in an automated manner. Further, the image of a fake phone is stored in a database for training since the image is typically used multiple times. A fake phone also has no electronics in the housing. Thus, the mass of the phone would vary from an authentic phone so if the kiosk 100 was equipped with a weight scale another means of detection of fake phones would be possible.

Another aspect of the present invention is phone screen crack detection. As shown in FIG. 17, an image of an authenticated mobile phone 150 has cracks in the display screen 153. The present invention can distinguish between actual cracks in a display screen glass as compared to an image with many color variations by performing a color entropy metric since cracks in the glass will not give off multiple different colors.

The present invention relates to a method for analysis of an electronic device and financial remuneration to a user for submission of the electronic device, the method comprising:
positioning an electronic device in an inspection area of a kiosk, the inspection area having a camera; imaging the electronic device to generate a silhouette image of the electronic device; generating a plurality of parameters for the electronic device based on the silhouette image; and comparing the plurality of parameters for the silhouette image to a plurality of trained images of electronic devices to identify the electronic device.

The plurality of parameters comprises dimensions of the electronic device.

According to embodiments, generating a plurality of parameters for the electronic device comprises determining a size of the sides of the electronic device.

The method comprises generating at least one illuminated image of the electronic device to determine a texture of the electronic device.

According to embodiments, the method comprises determining a value for the electronic device.

According to embodiments, the kiosk further comprises:
a housing; a user interface on an exterior surface of the housing for the user to input information; an upper chamber and a lower chamber, wherein the upper chamber comprises a plurality of mirrors; an upper chamber camera; a transparent surface; and a processor within the housing and in communication with the at least one camera.

According to embodiments, the processor is configured to identify the brand and model number of the electronic device based on at least one of the information from the user and the images from the at least one camera, the processor configured to determine a financial remuneration value for the electronic device.

According to embodiments, the electronic device comprises one of a mobile phone, a tablet computer or an e-reader.

According to embodiments, the method comprises detecting cracks in the display screen.

## Claims

1. A method for analysis of an electronic device (150) and financial remuneration to a user for submission of the electronic device, the method comprising:
positioning (2001) an electronic device in an inspection area (106) of a kiosk (100), the inspection area having a camera (610);
imaging (2002) the electronic device to generate a silhouette image of the electronic device determining dimensions of the electronic device based on the silhouette image; narrowing down a plurality of electronic devices in a training database based on the determined dimensions; and
identifying the electronic device;
**characterised in that** the method further comprises generating at least one illuminated image of the electronic device to determine a texture of the electronic device, and mapping the texture across the silhouette image; and comparing the textured silhouette image to a plurality of trained images of the narrowed-down plurality of electronic devices in the training database to identify the electronic device.

2. The method according to claim 1 wherein determining dimensions of the electronic device comprises determining a size of the sides of the electronic device.

3. The method according to any of claims 1-2 further comprising determining a value for the electronic device.

4. The method according to any of claims 1-3 wherein the kiosk further comprises:
a housing (105);
a user interface on an exterior surface of the housing for the user to input information;
an upper chamber (520) and a lower chamber (530);
a transparent surface (545); and
a processor (160) within the housing and in communication with the camera
wherein the camera is in the upper chamber.

5. The method according to claim 4 wherein the upper chamber comprises a plurality of mirrors (615).

6. The method according to any of claims 1-5 further comprising detecting cracks in a display screen (115) of the electronic device.

7. The method according to any of claims 4-6 wherein the processor is configured to identify the brand and model number of the electronic device based on at least one of the information from the user and the images from the camera, the processor configured to determine a financial remuneration value for the electronic device.

8. The method according to any of claims 1-7 further comprising narrowing down the plurality of trained images based on the silhouette image.

9. The method according to claim 3 further comprising offering a price or other remuneration for the electronic device.

10. The method according to any of claims 1-9 further comprising offering the user a chance to erase data from the electronic device.

11. The method according to any of claims 1-10 wherein the electronic device comprises one of a mobile phone, a tablet computer or an e-reader.

12. The method according to any of claims 4-11 further comprising moving the transparent surface to allow the electronic device to fall into a bin (555) of the kiosk

13. The method according to any of claims 1-12 further comprising moving the camera of the kiosk.

## Patentansprüche

1. Verfahren zur Analyse einer elektronischen Vorrichtung (150) und zur finanziellen Vergütung eines Benutzers für die Einreichung der elektronischen Vorrichtung, wobei das Verfahren umfasst:
Positionieren (2001) einer elektronischen Vorrichtung in einem Kontrollbereich (106) eines Kiosks (100), wobei der Kontrollbereich eine Kamera (610) aufweist;
Abbilden (2002) der elektronischen Vorrichtung, um ein Silhouettenbild der elektronischen Vorrichtung zu erzeugen;
Bestimmen der Abmessungen der elektronischen Vorrichtung auf der Grundlage des Silhouettenbildes;
Eingrenzen einer Vielzahl von elektronischen Vorrichtungen in einer Trainingsdatenbank auf der Grundlage der bestimmten Abmessungen; und
Identifizieren der elektronischen Vorrichtung;
**dadurch gekennzeichnet, dass** das Verfahren weiterhin umfasst:
Erzeugen mindestens eines beleuchteten Bildes der elektronischen Vorrichtung, um eine Textur der elektronischen Vorrichtung zu bestimmen, und Abbilden der Textur auf das Silhouettenbild; und
Vergleichen des texturierten Silhouettenbildes mit einer Vielzahl von trainierten Bildern der eingegrenzten Vielzahl von elektronischen Vorrichtungen in der Trainingsdatenbank, um die elektronische Vorrichtung zu identifizieren.

2. Verfahren nach Anspruch 1, bei dem das Bestimmen der Abmessungen der elektronischen Vorrichtung das Bestimmen der Größe der Seiten der elektronischen Vorrichtung umfasst.

3. Verfahren nach einem der Ansprüche 1 bis 2, weiterhin umfassend das Bestimmen eines Wertes für die elektronische Vorrichtung.

4. Verfahren nach einem der Ansprüche 1 bis 3, bei dem der Kiosk zudem umfasst:
ein Gehäuse (105);
eine Benutzerschnittstelle an einer Außenfläche des Gehäuses, über die der Benutzer Informationen eingeben kann;
eine obere Kammer (520) und eine untere Kammer (530);
eine transparente Oberfläche (545); und
einen Prozessor (160) innerhalb des Gehäuses, der mit der Kamera in Verbindung steht;
wobei sich die Kamera in der oberen Kammer befindet.

5. Verfahren nach Anspruch 4, bei dem die obere Kammer eine Vielzahl von Spiegeln (615) umfasst.

6. Verfahren nach einem der Ansprüche 1 bis 5, weiterhin umfassend das Erfassen von Rissen in einem Anzeigebildschirm (115) der elektronischen Vorrichtung.

7. Verfahren nach einem der Ansprüche 4 bis 6, bei dem der Prozessor dazu eingerichtet ist, die Marke und die Modellnummer der elektronischen Vorrichtung auf der Grundlage der Informationen von dem Benutzer und/oder den Bildern von der Kamera zu identifizieren, wobei der Prozessor dazu eingerichtet ist, einen finanziellen Vergütungswert für die elektronische Vorrichtung zu bestimmen.

8. Verfahren nach einem der Ansprüche 1 bis 7, weiterhin umfassend das Eingrenzen der Vielzahl von trainierten Bildern auf der Grundlage des Silhouettenbildes.

9. Verfahren nach Anspruch 3, weiterhin umfassend das Anbieten eines Preises oder einer anderen Vergütung für die elektronische Vorrichtung.

10. Verfahren nach einem der Ansprüche 1 bis 9, weiterhin umfassend das Anbieten an den Benutzer, Daten von der elektronischen Vorrichtung zu löschen.

11. Verfahren nach einem der Ansprüche 1 bis 10, bei dem die elektronische Vorrichtung ein Mobiltelefon, ein Tablet-Computer oder ein E-Reader ist.

12. Verfahren nach einem der Ansprüche 4 bis 11, weiterhin umfassend das Bewegen der transparenten Oberfläche, damit die elektronische Vorrichtung in einen Behälter (555) des Kiosks fallen kann.

13. Verfahren nach einem der Ansprüche 1 bis 12, weiterhin umfassend das Bewegen der Kamera des Kiosks.

## Revendications

1. Procédé pour analyser un dispositif électronique (150) et une rémunération financière d'un utilisateur pour une soumission du dispositif électronique, le procédé comprenant :
un positionnement (2001) d'un dispositif électronique dans une zone d'inspection (106) d'un kiosque (100), la zone d'inspection disposant d'une caméra (610) ;
une imagerie (2002) du dispositif électronique pour générer une image de silhouette du dispositif électronique déterminant des dimensions du dispositif électronique selon l'image de silhouette ;
limitation d'une pluralité de dispositifs électroniques dans une base de données d'entraînement selon les dimensions déterminées ; et
identification du dispositif électronique ;
**caractérisé en ce que** le procédé comprend en outre
une génération d'au moins une image illuminée du dispositif électronique pour déterminer une texture du dispositif électronique, et un mappage de la texture sur l'image de silhouette ; et
une comparaison de l'image de silhouette texturée à une pluralité d'images entraînées de la pluralité limitée de dispositifs électroniques dans la base de données d'entraînement pour identifier le dispositif électronique.

2. Le procédé selon la revendication 1 dans lequel une détermination de dimensions du dispositif électronique comprend une détermination d'une taille des côtés du dispositif électronique.

3. Le procédé selon l'une quelconque des revendications 1 et 2 comprenant en outre une détermination d'une valeur pour le dispositif électronique.

4. Le procédé selon l'une quelconque des revendications 1 à 3 dans lequel le kiosque comprend en outre :
un boîtier(105) ;
une interface d'utilisateur sur une surface extérieure du boîtier pour permettre à l'utilisateur d'entrer des informations ;
une chambre supérieure (520) et une chambre inférieure (530) ;
une surface transparente (545) ; et
un processeur (160) au sein du boîtier et en communication avec la caméra dans lequel la caméra est dans la chambre supérieure.

5. Le procédé selon la revendication 4 dans lequel la chambre supérieure comprend une pluralité de miroirs (615) .

6. Le procédé selon l'une quelconque des revendications 1 à 5 comprenant en outre une détection de fissures sur un écran d'affichage (115) du dispositif électronique.

7. Le procédé selon l'une quelconque des revendications 4 à 6 dans lequel le processeur est configuré pour identifier la marque et le numéro de modèle du dispositif électronique selon au moins une des informations fournies par l'utilisateur et les images issues de la caméra, le processeur configuré pour déterminer une valeur de rémunération financière pour le dispositif électronique.

8. Le procédé selon l'une quelconque des revendications 1 à 7 comprenant en outre une limitation de la pluralité d'images entraînées selon l'image de silhouette.

9. Le procédé selon la revendication 3 comprenant en outre une proposition d'un prix ou d'une autre rémunération pour le dispositif électronique.

10. Le procédé selon l'une quelconque des revendications 1 à 9 comprenant en outre d'offrir à l'utilisateur une possibilité d'effacer des données du dispositif électronique.

11. Le procédé selon l'une quelconque des revendications 1 à 10 dans lequel le dispositif électronique comprend un d'un téléphone mobile, d'une tablette informatique ou d'une liseuse électronique.

12. Le procédé selon l'une quelconque des revendications 4 à 11 comprenant en outre un déplacement de la surface transparente pour permettre la chute du dispositif électronique dans une corbeille (555) du kiosque.

13. Le procédé selon l'une quelconque des revendications 1 à 12 comprenant en outre un déplacement de la caméra du kiosque.
